(19) Europäisches Patentamt
European Patent Office
Office européen des brevets

(11) EP 3 911 605 B1

# (12) EUROPEAN PATENT SPECIFICATION

(45) Date of publication and mention of the grant of the patent:
**18.01.2023 Bulletin 2023/03**

(21) Application number: **20700021.7**

(22) Date of filing: **06.01.2020**

(51) International Patent Classification (IPC):
***C01G 53/00*** *(2006.01)* ***H01M 4/525*** *(2010.01)*
***H01M 4/131*** *(2010.01)* ***H01M 4/1391*** *(2010.01)*
***H01M 4/485*** *(2010.01)* ***H01M 10/0525*** *(2010.01)*

(52) Cooperative Patent Classification (CPC):
**C01G 53/50; C01G 53/006; C01G 53/42; H01M 4/131; H01M 4/1391; H01M 4/485; H01M 4/525; H01M 10/0525;** C01P 2002/52; C01P 2004/50; C01P 2004/61; C01P 2006/12; Y02E 60/10

(86) International application number:
**PCT/EP2020/050135**

(87) International publication number:
**WO 2020/148104 (23.07.2020 Gazette 2020/30)**

## (54) PROCESS FOR MAKING AN ELECTRODE ACTIVE MATERIAL

VERFAHREN ZUR HERSTELLUNG EINES ELEKTRODENAKTIVMATERIALS

PROCÉDÉ DE FABRICATION D’UN MATÉRIAU ACTIF D’ÉLECTRODE

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**

(30) Priority: **15.01.2019 US 201962792441 P**
**16.01.2019 EP 19152008**

(43) Date of publication of application:
**24.11.2021 Bulletin 2021/47**

(73) Proprietor: **BASF SE**
**67056 Ludwigshafen am Rhein (DE)**

(72) Inventors:
- **ERK, Christoph**
  **67056 Ludwigshafen (DE)**
- **HARTMANN, Pascal**
  **67056 Ludwigshafen (DE)**
- **LEE, Robert Matthew**
  **67056 Ludwigshafen (DE)**
- **SIOSS, James A**
  **Beachwood, Ohio 44122 (US)**

(74) Representative: **BASF IP Association**
**BASF SE**
**GBI-C006**
**67056 Ludwigshafen (DE)**

(56) References cited:
**US-A1- 2011 269 018** **US-A1- 2013 119 307**
**US-A1- 2015 249 248** **US-A1- 2018 233 739**

Note: Within nine months of the publication of the mention of the grant of the European patent in the European Patent Bulletin, any person may give notice to the European Patent Office of opposition to that patent, in accordance with the Implementing Regulations. Notice of opposition shall not be deemed to have been filed until the opposition fee has been paid. (Art. 99(1) European Patent Convention).

## Description

The present invention is directed towards a process for making an electrode active material according to general formula $Li_{1+x}TM_{1-x}O_2$, wherein TM is a combination of Ni and Co and Zr and at least one metal selected from Mn and Al, and, optionally, at least one of Mg, Ti, and W, wherein at least 60 mole-% is Ni, referring to the sum of Ni, Co and, if applicable, Mn and Al, and x is in the range of from zero to 0.2, said process comprising the following steps:

(a) mixing

(A) a mixed oxide or oxyhydroxide of Ni, Co and at least one of Mn and Al, and
(B) at least one lithium compound selected from lithium hydroxide, lithium oxide and lithium carbonate, and
(C) at least one oxide or hydroxide or oxyhydroxide of Zr with an average diameter D50 in the range of from 1 to 7 μm,

and in compounds (C) that are selected from oxides of Zr, their crystallite size is in the range of from 5 to 20 nm,
(b) subjecting said mixture to heat treatment at a temperature in the range of from 650 to 1000°C.

Lithiated transition metal oxides are currently being used as electrode active materials for lithium-ion batteries. Extensive research and developmental work has been performed in the past years to improve properties like charge density, specific energy, but also other properties like the reduced cycle life and capacity loss that may adversely affect the lifetime or applicability of a lithium-ion battery. Additional effort has been made to improve manufacturing methods.

Many electrode active materials discussed today are of the type of lithiated nickel-cobalt-manganese oxide ("NCM materials") or lithiated nickel-cobalt-aluminum oxide ("NCA materials").

In a typical process for making cathode materials for lithium-ion batteries, first a so-called precursor is being formed by co-precipitating the transition metals as carbonates, oxides or preferably as hydroxides that may or may not be basic. The precursor is then mixed with a lithium salt such as, but not limited to LiOH, $Li_2O$ or - especially - $Li_2CO_3$ - and calcined (fired) at high temperatures. Lithium salt(s) can be employed as hydrate(s) or in dehydrated form. The calcination - or firing - generally also referred to as thermal treatment or heat treatment of the precursor - is usually carried out at temperatures in the range of from 600 to 1,000 °C. During the thermal treatment a solid state reaction takes place, and the electrode active material is formed. In cases hydroxides or carbonates are used as precursors the solid state reaction follows a removal of water or carbon dioxide. The thermal treatment is performed in the heating zone of an oven or kiln.

Dopants such as aluminum, titanium or tungsten in NCM materials positively influence the stability of such NCM materials with respect to cycling stability and area specific resistance. Such stability may be impaired by $Li_2CO_3$ either stemming from unreacted lithium carbonate as starting material or being formed through carbon dioxide uptake by the basic electrode active material. US 2015/249248 A1 discloses a process for making an electrode active material comprising the steps of mixing a hydroxide of Ni, Co and Mn with lithium hydroxide and Zr oxide and subjecting said mixture to heat treatment at a temperature of 890°C.

It was therefore an objective of the present invention to provide a method for making an electrode active material with high cycling stability and with low resistance increase upon cycling. Accordingly, the process as defined at the outset has been found, hereinafter also defined as inventive process or as process according to the current invention. The inventive process shall be described in more detail below.

The inventive process is a process for making an electrode active material according to general formula $Li_{1+x}TM_{1-x}O_2$, wherein TM is a combination of Ni and Co and Zr and at least one metal selected from Mn and Al, and, optionally, at least one of Mg, Ti, and W, and x is in the range of from zero to 0.2, preferably 0.01 to 0.05, said process comprising the following steps, hereinafter in brief also referred to as step (a) and step (b), respectively.

Step (a) includes mixing

(A) a mixed oxide or oxyhydroxide of Ni, Co and at least one of Mn and Al, and, optionally, at least one of Mg, Ti, and W, hereinafter also referred to as oxyhydroxide (A) or oxide (A), respectively, or altogether as precursor (A), and
(B) at least one lithium compound selected from lithium hydroxide, lithium oxide and lithium carbonate, hereinafter also referred to as lithium salt (B) or lithium compound (B), and
(C) at least one oxide or hydroxide or oxyhydroxide of Zr with an average diameter D50 in the range of from 1 to 7 μm, hereinafter also referred to as compound (C),

wherein at least 60 mole-% of TM is Ni, referring to the sum of Ni and Co and, if applicable, Mn or Al.

In one embodiment of the present invention, precursor (A) is obtained by co-precipitation of a mixed hydroxide of nickel, cobalt and manganese, followed by drying under air and partial or full dehydration.

Precursor (A) may be obtained by co-precipitating nickel, cobalt and manganese as hydroxides followed by drying in an atmosphere containing oxygen and a thermal pre-treatment in an atmosphere containing oxygen.

Precursor (A) is preferably obtained by co-precipitating nickel, cobalt and manganese as hydroxides from an aqueous solution containing nitrates, acetates or preferably sulfates of nickel, cobalt and manganese in a stoichiometric ratio corresponding to TM. Said co-precipitation is effected by the addition of alkali metal hydroxide, for example potassium hydroxide or sodium hydroxide, in a continuous, semi-continuous or batch process. Said co-precipitation is then followed by removal of the mother liquor, for example filtration, and subsequent removal of water.

It is even more preferred that TM in the targeted electrode active material is the same as TM in precursor (A) plus the metal M, see below.

The removal of water is preferably performed in at least two sub-steps at different temperatures, for example 80 to 150°C in sub-step 1 and 165 to 600°C in sub-step 2.

In one embodiment of the present invention, the removal of water is performed in different apparatuses. Sub-step 1 is preferably performed in a spray dryer, in a spin-flash dryer or in a contact dryer. Sub-step 2 may be performed in a rotary kiln, a roller heath kiln or in a box kiln.

Precursor (A) is in particulate form. In one embodiment of the present invention, the mean particle diameter (D50) of precursor (A) is in the range of from 4 to 15 $\mu$m, preferably 5 to 12 $\mu$m, more preferably 7 to 10 $\mu$m. The mean particle diameter (D50) in the context of the present invention refers to the median of the volume-based particle diameter, as can be determined, for example, by light scattering.

The particle shape of the secondary particles of precursor (A) is preferably spheroidal, that are particles that have a spherical shape. Spherical spheroidal shall include not just those which are exactly spherical but also those particles in which the maximum and minimum diameter of at least 90% (number average) of a representative sample differ by not more than 10%.

In one embodiment of the present invention, precursor (A) is comprised of secondary particles that are agglomerates of primary particles. Preferably, precursor (A) is comprised of spherical secondary particles that are agglomerates of primary particles. Even more preferably, precursor (A) is comprised of spherical secondary particles that are agglomerates of spherical primary particles or platelets.

In one embodiment of the present invention, precursor (A) may have a particle diameter distribution span in the range of from 0.5 to 0.9, the span being defined as [(D90) - (D10)] divided by (D50), all being determined by LASER analysis. In another embodiment of the present invention, precursor (A) may have a particle diameter distribution span in the range of from 1.1 to 1.8.

In one embodiment of the present invention the surface (BET) of precursor (A) is in the range of from 2 to 10 $m^2/g$, determined by nitrogen adsorption, for example in accordance with to DIN-ISO 9277:2003-05.

In one embodiment of the present invention precursor (A) may have a homogeneous distribution of the transition metals nickel, cobalt and manganese over the diameter of the particles. In other embodiments of the present invention, the distribution of at least two of nickel, cobalt and manganese is non-homogeneous, for example exhibiting a gradient of nickel and manganese, or showing layers of different concentrations of at least two of nickel, cobalt and manganese. It is preferred that precursor (A) has a homogeneous distribution of the transition metals over the diameter of particles.

In one embodiment of the present invention, precursor (A) may contain elements other than nickel and cobalt, for example titanium, tungsten, molybdenum, niobium or magnesium, for example in amounts of 0.1 to 5% by mole, referring to TM. However, it is preferred that precursor (A) only contains negligible amounts of elements other nickel, cobalt and at least one of aluminum and manganese, for example detection level up to 0.05% by mole.

Precursor (A) may contain traces of metal ions, for example traces of ubiquitous metals such as sodium, calcium, iron or zinc, as impurities but such traces will not be taken into account in the description of the present invention. Traces in this context will mean amounts of 0.05 mol-% or less, referring to the total metal content of TM.

In one embodiment of the present invention, precursor (A) contains one or more impurities such as residual sulphate in case such precursor has been made by co-precipitation from a solution of one or more sulphates of nickel, cobalt and manganese. The sulphate may be in the range of from 0.1 to 0.4% by weight, referring to the entire precursor (A).

In one embodiment of the present invention, TM is of the general formula (I)

$$(Ni_aCO_bMn_c)_{1-d-e}M_dZr_e \qquad (I)$$

with

a being in the range of from 0.6 to 0.95, preferably 0.65 to 0.87,
b being in the range of from 0.03 to 0.2, preferably 0.05 to 0.1,
c being in the range of from zero to 0.2, preferably 0.05 to 0.2, more preferably 0.08 to 0.2,
d being in the range of from zero to 0.05,
e being in the range of from 0.0001 to 0.01, preferably from 0.0001 to 0.005,

M is selected from Al, Mg, Ti, W and combinations of at least two of the foregoing, and

$$a + b + c = 1,$$

wherein, when c is zero, d is greater than zero and M includes Al, or, when M does not include Al or d is zero, c is greater than zero.

In a preferred embodiment of the present invention, at least 60 mole-% of TM is Ni, for example 60 to 95 mole-%, more preferably 60 to 90 mole% and even more preferably 60 to 80 mole-%, the percentage in each case referring to the sum of Ni, Co and - if applicable, Mn and Al. Specific examples are $Ni_{0.6}Co_{0.2}Mn_{0.2}$, $Ni_{0.8}Co_{0.1}Mn_{0.1}$, $Ni_{0.85}Co_{0.1}Mn_{0.05}$, $Ni_{0.88}Co_{0.065}Al_{0.055}$, $Ni_{0.91}CO_{0.045}Al_{0.045}$ and $Ni_{0.7}Co_{0.2}Mn_{0.1}$.

In one embodiment of the present invention, precursor (A) is an oxide or oxyhydroxide of TM, and the resultant electrode active material is $Li_{1+x}TM_{1-x}O_2$, wherein TM in precursor (A) is the same with respect to the amounts of transition metals as in the electrode active material minus Zr, as the case may be.

In a preferred embodiment of the present invention, TM is boron-free. In the context of the present invention, "boron-free" means that the B content of electrode active material made according to the present invention contains less than 100 ppm of B, as determined by inductively-coupled plasma - optical emission spectroscopy ("ICP-OES"). Even more preferably, the B content is below detection level.

In one embodiment of the present invention, $0.0001 \leq d + e \leq 0.005$.

As precursor (A), oxyhydroxides with a residual moisture content in the range of from 0.1 to 50 % by weight are particularly feasible. In the context of precursor (A), the moisture content is calculated as g $H_2O$ per 100 g of precursor (A). In this case, $H_2O$ may be bound chemically as hydroxyl group, or be bound by physisorption. It is preferred that the residual moisture in precursor (A) is low, for example 0.1 to 5 % by weight. Even more preferably, precursor (A) is an oxide of TM with no detectable amounts of residual moisture.

Examples of lithium compound (B) are $Li_2O$, LiOH, and $Li_2CO_3$, each water-free or as hydrate, if applicable, for example $LiOH \cdot H_2O$. Preferred example is lithium hydroxide.

Lithium compound (B) is preferable in particulate form, for example with an average diameter (D50) in the range of from 3 to 10 $\mu$m, preferably from 5 to 9 $\mu$m.

Compound (C) may serve as source of dopant. Compound (C) is selected from oxides and hydroxides and oxyhydroxides of Zr, hydroxides and oxyhydroxides of Zr being preferred. In the context of the present invention, oxides and hydroxides and oxyhydroxides of Zr include hydrates thereof. Lithium zirconate is also a possible source of Zr. Examples of compounds (C) are $ZrO_2$, $ZrO(OH)_2$, $ZrO_2 \cdot aq$, and $Zr(OH)_4$.

$Zr(OH)_4$ is preferably selected from amorphous $Zr(OH)_4$.

In one embodiment of the present invention compound (C) may have a specific surface (BET), hereinafter also "BET-surface", in the range of from 30 to 400 $m^2/g$, preferably 200 to 400 $m^2/g$, more preferably 250 to 350 $m^2/g$. The BET-surface may be determined by nitrogen adsorption, for example according to DIN-ISO 9277:2003-05 with a heating temperature of 200°C.

In one embodiment of the present invention, compound (C) is a particulate material with an average diameter (D50) in the range of from 1 to 7 $\mu$m, preferably 2 to 5 $\mu$m. Compound (C) is usually in the form of agglomerates. Its particle diameter refers to the diameter of said agglomerates.

In embodiments wherein compound (C) is selected from oxides of Zr, the crystallite size - as determined by XRD - is in the range of from 5 to 20 nm.

In a preferred embodiment, compound (C) is applied in an amount of up to 0.5 mole % (referred to TM), for example 0.01 to 0.5 mole-%, preferably 0.1 up to 0.45 mole %.

Examples of suitable apparatuses for performing step (a) are high-shear mixers, tumbler mixers, plough-share mixers and free fall mixers.

In one embodiment of the present invention, step (a) is performed at a temperature in the range of from ambient temperature to 200°C, preferably 20 to 50°C.

In one embodiment of the present invention, step (a) has a duration of 10 minutes to 2 hours. Depending on whether additional mixing is performed in step (b) or not, thorough mixing has to be accomplished in step (a).

Mixing of precursor (A), lithium compound (B) and compound (C) may be performed all in one or in sub-steps, for example by first mixing lithium compound (B) and compound (C) and adding such mixture to precursor (A), or by first mixing precursor (A) and lithium compound (B) and then adding compound (C), or by first mixing compound (C) and precursor (A) and then adding lithium compound (B). It is preferred to first mix precursor (A) and lithium compound (B) and to then add compound (C).

Although it is possible to add an organic solvent, for example glycerol or glycol, or water in step (a) it is preferred to perform step (a) in the dry state, that is without addition of water or of an organic solvent.

A mixture is obtained.

In one embodiment of the present invention, in the mixing step (a),
(D) at least one oxide or hydroxide or oxyhydroxide of Mg, Al, Ti or W or a combination of at least two of the foregoing is included, hereinafter also referred to as compound (D).

Lithium titanate is also a possible source of titanium as compound (D). Examples of compounds (D) are $TiO_2$ selected from rutile and anatase, anatase being preferred, furthermore basic titania such as $TiO(OH)_2$, furthermore $Li_4Ti_5O_{12}$, $WO_3$, MgO, $Mg(OH)_2$, $Al(OH)_3$, $Al_2O_3$, $Al_2O_3 \cdot aq$, and AlOOH. Preferred are Al compounds such as $Al(OH)_3$, $\alpha$-$Al_2O_3$, $\gamma$-$Al_2O_3$, $Al_2O_3 \cdot aq$, and AlOOH. Even more preferred compounds (C) are $Al_2O_3$ selected from $\alpha$-$Al_2O_3$, $\gamma$-$Al_2O_3$, and most preferred is $\gamma$-$Al_2O_3$.

Step (b) includes subjecting said mixture to heat treatment at a temperature in the range of from 650 to 1000°C, preferably 700 to 925°C.

In one embodiment of the present invention, the mixture of precursor (A) and lithium compound (B) and residual (C) and, optionally, compound(s) (D), and, optionally, solvent(s), is heated to 650 to 1000 °C with a heating rate of 0.1 to 10 °C/min.

In one embodiment of the present invention, the temperature is ramped up before reaching the desired temperature of from 650 to 1000°C, preferably 750 to 900°C. For example, first the mixture of precursor (A) and lithium compound (B) and compound (C) and, optionally, compound(s) (D) is heated to a temperature to 350 to 550°C and then held constant for a time of 10 min to 4 hours, and then it is raised to 700°C up to 1000°C.

In embodiments wherein in step (a) at least one solvent has been used, as part of step (b), or separately and before commencing step (b), such solvent(s) are removed, for example by filtration, evaporation or distilling of such solvent(s). Preferred are evaporation and distillation.

In one embodiment of the present invention, step (b) is performed in a roller hearth kiln, a pusher kiln or a rotary kiln or a combination of at least two of the foregoing. Rotary kilns have the advantage of a very good homogenization of the material made therein. In roller hearth kilns and in pusher kilns, different reaction conditions with respect to different steps may be set quite easily. In lab scale trials, box-type and tubular furnaces and split tube furnaces are feasible as well.

In one embodiment of the present invention, step (b) is performed in an oxygen-containing atmosphere, for example in a nitrogen-air mixture, in a rare gas-oxygen mixture, in air, in oxygen or in oxygen-enriched air. In a preferred embodiment, the atmosphere in step (b) is selected from air, oxygen and oxygen-enriched air. Oxygen-enriched air may be, for example, a 50:50 by volume mix of air and oxygen. Other options are 1:2 by volume mixtures of air and oxygen, 1:3 by volume mixtures of air and oxygen, 2:1 by volume mixtures of air and oxygen, and 3:1 by volume mixtures of air and oxygen.

In one embodiment of the present invention, step (b) of the present invention is performed under a stream of gas, for example air, oxygen and oxygen-enriched air. Such stream of gas may be termed a forced gas flow. Such stream of gas may have a specific flow rate in the range of from 0.5 to 15 $m^3/h \cdot kg$ material according to general formula $Li_{1+x}TM_{1-x}O_2$. The volume is determined under normal conditions: 298 Kelvin and 1 atmosphere. Said stream of gas is useful for removal of gaseous cleavage products such as water and carbon dioxide.

The inventive process may include further steps such as, but not limited, additional calcination steps at a temperature in the range of from 500 to 1000°C subsequently to step (b).

In one embodiment of the present invention, step (b) has a duration in the range of from one hour to 30 hours. Preferred are 10 to 24 hours. The cooling time is neglected in this context.

After thermal treatment in accordance to step (b), the electrode active material so obtained is cooled down before further processing.

By performing the inventive process electrode active materials with excellent properties are available through a straightforward process. Preferably, the electrode active materials so obtained have a surface (BET) in the range of from 0.1 to 0.8 $m^2/g$, determined according to DIN-ISO 9277:2003-05.

In one embodiment of the present invention, it can be detected that especially Zr is non-uniformly distributed in electrode active material obtained according to the inventive process, with enrichments in the outer part of the primary particles.

Further disclosed herein are particulate electrode active materials, hereinafter also referred to as electrode active materials made according to the inventive process. Electrode materials made according to the inventive process follow general formula $Li_{1+x}TM_{1-x}O_2$, wherein TM is a combination of metals according to general formula (I)

$$(Ni_aCO_bMn_c)_{1-d-e}M_dZr_e \qquad (I)$$

with

a being in the range of from 0.6 to 0.95, preferably 0.65 to 0.87,
b being in the range of from 0.03 to 0.2, preferably 0.05 to 0.1,
c being in the range of from zero to 0.2, preferably 0.05 to 0.2, more preferably 0.08 to 0.2,

d being in the range of from zero to 0.05,
e being in the range of from 0.0001 to 0.01, preferably from 0.0001 to 0.005,

M is selected from Al, Mg, Ti, W and combinations of at least two of the foregoing, and

$$a + b + c = 1,$$

wherein said electrode active material is composed of spherical secondary particles that are agglomerates of primary particles,
and wherein Zr is enriched in the outer zone of said primary particles.

Said enrichment may be detected, e.g., by TEM-EDX mapping (transition electron microscopy energy-dispersive X-ray spectroscopy). Said enrichment means that 75 mole-% or more of the Zr in inventive electrode material is in a layer with a thickness in the range of a few nanometers, for example from 2 to 10 nm, and that a low percentage of Zr is found in the center of primary particles, for example 25 mole-% or less. The Zr-containing zone of the primary particles, however, is thicker than a pure coating would correspond to.

Preferably, the outer zone of the primary particles of such electrode active materials comprises the majority of the Zr content of said particular electrode active material. Said outer zone refers to the part of the primary particles within 10 nm of the outer surface, preferably within 5 nm of the outer surface.

In one embodiment of the present invention, $0.0001 \leq d + e \leq 0.005$.

In one embodiment of the present invention, electrode active material made according to the inventive process has a BET-surface in the range of from 0.1 to 0.8 $m^2/g$. The BET-surface may be determined by nitrogen adsorption after outgassing of the sample at 200°C for 30 minutes or more in accordance with DIN ISO 9277:2010.

Preferably, TM in inventive particulate material is selected from $Ni_{0.6}Co_{0.2}Mn_{0.2}$, $Ni_{0.8}Co_{0.1}Mn_{0.1}$, $Ni_{0.85}Co_{0.1}Mn_{0.05}$, $Ni_{0.88}Co_{0.065}Al_{0.055}$, $Ni_{0.91}Co_{0.045}Al_{0.045}$ and $Ni_{0.7}Co_{0.2}Mn_{0.1}$.

In one embodiment of the present invention electrode active material made according to the inventive process has an average particle diameter (D50) in the range of from 3 to 20 μm, preferably from 5 to 16 μm. The average particle diameter can be determined, e. g., by light scattering or LASER diffraction or electroacoustic spectroscopy. The particles are usually composed of agglomerates from primary particles, and the above particle diameter refers to the secondary particle diameter.

In one embodiment of the present invention, the primary particles of such electrode active materials have an average particle diameter in the range of from 100 to 500 nm.

Electrode active materials made according to the inventive process are very well suited for cathodes in lithium ion batteries. They exhibit a low resistance build-up in the cause of repeated cycling, for example 500 or more cycles.

Furthermore disclosed are electrodes comprising at least one electrode active material made according to the inventive process. They are particularly useful for lithium ion batteries. Lithium ion batteries comprising at least one such electrode according to the present invention exhibit a good discharge behavior. Electrodes comprising at least one electrode active material according to the present invention are hereinafter also referred to cathodes made according to the present invention.

Cathodes made according to the present invention can comprise further components. They can comprise a current collector, such as, but not limited to, an aluminum foil. They can further comprise conductive carbon and a binder.

Suitable binders are preferably selected from organic (co)polymers. Suitable (co)polymers, i.e. homopolymers or copolymers, can be selected, for example, from (co)polymers obtainable by anionic, catalytic or free-radical (co)polymerization, especially from polyethylene, polyacrylonitrile, polybutadiene, polystyrene, and copolymers of at least two comonomers selected from ethylene, propylene, styrene, (meth)acrylonitrile and 1,3-butadiene. Polypropylene is also suitable. Polyisoprene and polyacrylates are additionally suitable. Particular preference is given to polyacrylonitrile.

In the context of the present invention, polyacrylonitrile is understood to mean not only polyacrylonitrile homopolymers but also copolymers of acrylonitrile with 1,3-butadiene or styrene. Preference is given to polyacrylonitrile homopolymers.

In the context of the present invention, polyethylene is not only understood to mean homopoly-ethylene, but also copolymers of ethylene which comprise at least 50 mol% of copolymerized ethylene and up to 50 mol% of at least one further comonomer, for example α-olefins such as propylene, butylene (1-butene), 1-hexene, 1-octene, 1-decene, 1-dodecene, 1-pentene, and also isobutene, vinylaromatics, for example styrene, and also (meth)acrylic acid, vinyl acetate, vinyl propionate, $C_1$-$C_{10}$-alkyl esters of (meth)acrylic acid, especially methyl acrylate, methyl methacrylate, ethyl acrylate, ethyl methacrylate, n-butyl acrylate, 2-ethylhexyl acrylate, n-butyl methacrylate, 2-ethylhexyl methacrylate, and also maleic acid, maleic anhydride and itaconic anhydride. Polyethylene may be HDPE or LDPE.

In the context of the present invention, polypropylene is not only understood to mean homopolypropylene, but also copolymers of propylene which comprise at least 50 mol% of copolymerized propylene and up to 50 mol% of at

least one further comonomer, for example ethylene and α-olefins such as butylene, 1-hexene, 1-octene, 1-decene, 1-dodecene and 1-pentene. Polypropylene is preferably isotactic or essentially isotactic polypropylene.

In the context of the present invention, polystyrene is not only understood to mean homopolymers of styrene, but also copolymers with acrylonitrile, 1,3-butadiene, (meth)acrylic acid, $C_1$-$C_{10}$-alkyl esters of (meth)acrylic acid, divinylbenzene, especially 1,3-divinylbenzene, 1,2-diphenylethylene and α-methylstyrene.

Another preferred binder is polybutadiene.

Other suitable binders are selected from polyethylene oxide (PEO), cellulose, carboxymethylcellulose, polyimides and polyvinyl alcohol.

In one embodiment of the present invention, binder is selected from those (co)polymers which have an average molecular weight $M_w$ in the range from 50,000 to 1,000,000 g/mol, preferably to 500,000 g/mol.

Binder may be cross-linked or non-cross-linked (co)polymers.

Particularly preferred binders are selected from halogenated (co)polymers, especially from fluorinated (co)polymers. Halogenated or fluorinated (co)polymers are understood to mean those (co)polymers which comprise at least one (co)polymerized (co)monomer which has at least one halogen atom or at least one fluorine atom per molecule, more preferably at least two halogen atoms or at least two fluorine atoms per molecule. Examples are polyvinyl chloride, polyvinylidene chloride, polytetrafluoroethylene, polyvinylidene fluoride (PVdF), tetrafluoroethylene-hexafluoropropylene copolymers, vinylidene fluoride-hexafluoropropylene copolymers (PVdF-HFP), vinylidene fluoride-tetrafluoroethylene copolymers, perfluoroalkyl vinyl ether copolymers, ethylene-tetrafluoroethylene copolymers, vinylidene fluoride-chlorotrifluoroethylene copolymers and ethylene-chlorofluoroethylene copolymers.

Suitable binders are especially polyvinyl alcohol and halogenated (co)polymers, for example polyvinyl chloride or polyvinylidene chloride, especially fluorinated (co)polymers such as polyvinyl fluoride and especially polyvinylidene fluoride and polytetrafluoroethylene.

Cathodes made according to the present invention may comprise 1 to 15% by weight of binder(s), referring to electrode active material. In other embodiments, inventive cathodes may comprise 0.1 up to less than 1% by weight of binder(s).

A further aspect of the present invention is a battery, containing at least one cathode comprising electrode active material made according to the inventive process, carbon, and binder, at least one anode, and at least one electrolyte.

Embodiments of cathodes made according to the present invention have been described above in detail.

Said anode may contain at least one anode active material, such as carbon (graphite), $TiO_2$, lithium titanium oxide, silicon, lithium or tin. Said anode may additionally contain a current collector, for example a metal foil such as a copper foil.

Said electrolyte may comprise at least one non-aqueous solvent, at least one electrolyte salt and, optionally, additives.

Non-aqueous solvents for electrolytes can be liquid or solid at room temperature and is preferably selected from among polymers, cyclic or acyclic ethers, cyclic and acyclic acetals and cyclic or acyclic organic carbonates.

Examples of suitable polymers are, in particular, polyalkylene glycols, preferably poly-$C_1$-$C_4$-alkylene glycols and in particular polyethylene glycols. Polyethylene glycols can here comprise up to 20 mol% of one or more $C_1$-$C_4$-alkylene glycols. Polyalkylene glycols are preferably polyalkylene glycols having two methyl or ethyl end caps.

The molecular weight $M_w$ of suitable polyalkylene glycols and in particular suitable polyethylene glycols can be at least 400 g/mol.

The molecular weight $M_w$ of suitable polyalkylene glycols and in particular suitable polyethylene glycols can be up to 5 000 000 g/mol, preferably up to 2 000 000 g/mol.

Examples of suitable acyclic ethers are, for example, diisopropyl ether, di-n-butyl ether, 1,2-dimethoxyethane, 1,2-diethoxyethane, with preference being given to 1,2-dimethoxyethane.

Examples of suitable cyclic ethers are tetrahydrofuran and 1,4-dioxane.

Examples of suitable acyclic acetals are, for example, dimethoxymethane, diethoxymethane, 1,1-dimethoxyethane and 1,1-diethoxyethane.

Examples of suitable cyclic acetals are 1,3-dioxane and in particular 1,3-dioxolane.

Examples of suitable acyclic organic carbonates are dimethyl carbonate, ethyl methyl carbonate and diethyl carbonate.

Examples of suitable cyclic organic carbonates are compounds of the general formulae (III) and (IV)

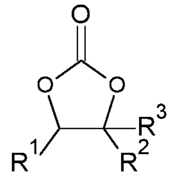

(III)

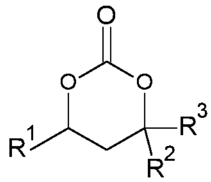

(IV)

where $R^1$, $R^2$ and $R^3$ can be identical or different and are selected from among hydrogen and $C_1$-$C_4$-alkyl, for example methyl, ethyl, n-propyl, isopropyl, n-butyl, isobutyl, sec-butyl and tert-butyl, with $R^2$ and $R^3$ preferably not both being tert-butyl.

In particularly preferred embodiments, $R^1$ is methyl and $R^2$ and $R^3$ are each hydrogen, or $R^1$, $R^2$ and $R^3$ are each hydrogen.

Another preferred cyclic organic carbonate is vinylene carbonate, formula (V).

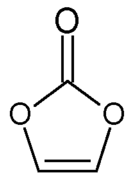

(V)

The solvent or solvents is/are preferably used in the water-free state, i.e. with a water content in the range from 1 ppm to 0.1% by weight, which can be determined, for example, by Karl-Fischer titration.

Electrolyte (C) further comprises at least one electrolyte salt. Suitable electrolyte salts are, in particular, lithium salts. Examples of suitable lithium salts are $LiPF_6$, $LiBF_4$, $LiClO_4$, $LiAsF_6$, $LiCF_3SO_3$, $LiC(C_nF_{2n+1}SO_2)_3$, lithium imides such as $LiN(C_nF_{2n+1}SO_2)_2$, where n is an integer in the range from 1 to 20, $LiN(SO_2F)_2$, $Li_2SiF_6$, $LiSbF_6$, $LiAlCl_4$ and salts of the general formula $(C_nF_{2n+1}SO_2)_tYLi$, where m is defined as follows:

t = 1, when Y is selected from among oxygen and sulfur,
t = 2, when Y is selected from among nitrogen and phosphorus, and
t = 3, when Y is selected from among carbon and silicon.

Preferred electrolyte salts are selected from among $LiC(CF_3SO_2)_3$, $LiN(CF_3SO_2)_2$, $LiPF_6$, $LiBF_4$, $LiClO_4$, with particular preference being given to $LiPF_6$ and $LiN(CF_3SO_2)_2$.

In an embodiment of the present invention, batteries made according to the invention comprise one or more separators by means of which the electrodes are mechanically separated. Suitable separators are polymer films, in particular porous polymer films, which are unreactive toward metallic lithium. Particularly suitable materials for separators are polyolefins, in particular film-forming porous polyethylene and film-forming porous polypropylene.

Separators composed of polyolefin, in particular polyethylene or polypropylene, can have a porosity in the range from 35 to 45%. Suitable pore diameters are, for example, in the range from 30 to 500 nm.

In another embodiment of the present invention, separators can be selected from among PET nonwovens filled with inorganic particles. Such separators can have porosities in the range from 40 to 55%. Suitable pore diameters are, for example, in the range from 80 to 750 nm.

Batteries made according to the invention further comprise a housing which can have any shape, for example cuboidal or the shape of a cylindrical disk or a cylindrical can. In one variant, a metal foil configured as a pouch is used as housing.

Batteries made according to the invention display a good discharge behavior, for example at low temperatures (zero °C or below, for example down to -10°C or even less), a very good discharge and cycling behavior, in particular at high temperatures (45 °C or higher, for example up to 60°C) in particular with respect to the capacity loss, and a good safety behavior at high temperatures such as 60°C or more. Preferably, also the cycle stability and the C-rate capacity behavior are improved, or they are at least identical although the Li content is lower.

Batteries made according to the invention can comprise two or more electrochemical cells that combined with one another, for example can be connected in series or connected in parallel. Connection in series is preferred. In batteries according to the present invention, at least one of the electrochemical cells contains at least one cathode according to the invention. Preferably, in electrochemical cells according to the present invention, the majority of the electrochemical cells contains a cathode according to the present invention. Even more preferably, in batteries according to the present invention all the electrochemical cells contain cathodes according to the present invention.

The present invention further provides for the use of batteries made according to the invention in appliances, in particular in mobile appliances. Examples of mobile appliances are vehicles, for example automobiles, bicycles, aircraft or water vehicles such as boats or ships. Other examples of mobile appliances are those which move manually, for example computers, especially laptops, telephones or electric hand tools, for example in the building sector, especially drills, battery-powered screwdrivers or battery-powered staplers.

The invention is further illustrated by working examples.

(C.1): $Zr(OH)_4$, (D50): 4.3 μm, amorphous, BET-surface: 322 $m^2/g$
(C.2): $Zr(OH)_4$, (D50): 4.0 μm, amorphous, BET-surface: 390 $m^2/g$
(C.3): $ZrO_2$ - crystallite size in nm (by XRD): 6.0 - 10.5 nm, (D50): 3.4 μm, BET-surface: 34 $m^2/g$, cubic and monoclinic phases
(C.4): $ZrO_2$ - crystallite size in nm (by XRD): 8.5 - 15.5 nm, (D50): 6.9 μm, BET-surface: 103 $m^2/g$, cubic and monoclinic phases
C-(C.5): $ZrO_2$ - crystallite size in nm (by XRD): 31 nm, (D.50): 9.7 μm, BET-surface: 25 $m^2/g$, monoclinic
C-(C.6): $ZrO_2$ - crystallite size in nm (by XRD): 78 nm, (D.50): 0.7 μm, BET-surface: 4 $m^2/g$, monoclinic
C-(C.7): $Zr(OH)_4$, (D50): more than 10 μm, amorphous, BET-surface: 187 $m^2/g$
(D.1): MgO, (D50): 1.5 μm, BET-surface: 11 $m^2/g$
(D.2): $\gamma$-$Al_2O_3$, (D50): 2.6 μm, BET-surface: 142 $m^2/g$
(D.3): $TiO_2$ - anatase, (D50): 2.4 μm, BET-surface: 87 $m^2/g$
(D.4): $WO_3$, (D50): 8.24 μm, BET-surface: 7.6 $m^2/g$

The BET-surface values were each determined after heating 12 hours to 200°C under vacuum.

Examples

I.1: Synthesis of precursor (A.1)

A stirred tank reactor was filled with deionized water and 49 g of ammonium sulfate per kg of water. The solution was tempered to 55°C and a pH value of 12 was adjusted by adding an aqueous sodium hydroxide solution.

The co-precipitation reaction was started by simultaneously feeding an aqueous transition metal sulfate solution and aqueous sodium hydroxide solution at a flow rate ratio of 1.8, and a total flow rate resulting in a residence time of 8 hours. The transition metal solution contained Ni, Co and Mn at a molar ratio of 8.5:1:0.5 and a total transition metal concentration of 1.65 mol/kg. The aqueous sodium hydroxide solution was a 25 wt.% sodium hydroxide solution and 25 wt.% ammonia solution in a weight ratio of 6. The pH value was kept at 12 by the separate feed of an aqueous sodium hydroxide solution. Beginning with the start-up of all feeds, mother liquor was removed continuously. After 33 hours all feed flows were stopped. The mixed transition metal (TM) oxyhydroxide precursor (A.1) was obtained by filtration of the resulting suspension, washing with distilled water, drying at 120°C in air and sieving. Transition metal composition: $Ni_{0.85}Co_{0.1}Mn_{0.05}$.

I.2: Synthesis of an electrode active material: example CAM.31

The precursor (A.1) was mixed with (C.1) and with LiOH monohydrate (B.1) to obtain a concentration of 0.5 mole-% Zr relative to Ni+Co+Mn+Zr and a Li/(Ni+Co+Mn+Zr) molar ratio of 1.02. The mixture was heated to 750°C and kept for 6 h in a forced flow of oxygen. Cathode active material CAM.31 so obtained was tested as described below. CAM.31 showed excellent cycling performance and resistance growth behavior at a temperature of 45°C.

Further experiments and comparison experiments based on (A.1) and (B.1) I amounts according to the above example 1 were performed analogously to Example1. All experiments resulted in a high 1$^{st}$ discharge capacity of 202 to 209 mA·h/g according to the coin half-cell test described below. Examples according to the present invention display a low resistance growth determined by the coin full cell test described below (shown as % after 100 cycles). Results are shown in Table 1.

Table 1: Composition of comparative and inventive cathode active materials

| Number | mole-% (C) | mole-% (D.1) | mole-% (D.2) | mole-% (D.3) | mole-% (D.4) | R growth [%] |
|---|---|---|---|---|---|---|
| C-CAM.1 | 0 | 0 | 0 | 0 | 0 | 228.2 |
| C-CAM.2 | 0 | 0 | 0 | 0 | 0.25 | 176.4 |
| C-CAM.3 | 0 | 0 | 0 | 0 | 0.5 | 193.3 |
| C-CAM.4 | 0 | 0.25 | 0 | 0 | 0 | 200.3 |
| C-CAM.5 | 0 | 0.5 | 0 | 0 | 0 | 191.5 |
| C-CAM.6 | 0 | 0.17 | 0.16 | 0 | 0.17 | 196.7 |
| C-CAM.7 | 0 | 0.26 | 0.24 | 0 | 0 | 195.3 |
| C-CAM.8 | 0 | 0 | 0.25 | 0 | 0 | 240.8 |
| C-CAM.9 | 0 | 0 | 0.25 | 0 | 0.25 | 158.7 |
| C-CAM.11 | 0 | 0.25 | 0.25 | 0 | 0 | 218.6 |
| C-CAM.12 | 0 | 0 | 0.26 | 0 | 0 | 178.1 |
| C-CAM.13 | 0 | 0 | 0.5 | 0 | 0 | 211.4 |
| C-CAM.14 | 0 | 0.17 | 0 | 0.16 | 0.17 | 183.5 |
| C-CAM.15 | 0 | 0.17 | 0.16 | 0.17 | 0 | 217.6 |
| C-CAM.16 | 0 | 0 | 0.17 | 0.17 | 0.16 | 187.3 |
| C-CAM.17 | 0 | 0 | 0 | 0.25 | 0 | 210.6 |
| C-CAM.18 | 0 | 0 | 0 | 0.25 | 0.25 | 181.1 |
| C-CAM.19 | 0 | 0.25 | 0 | 0.25 | 0 | 214.1 |
| C-CAM.20 | 0 | 0 | 0.25 | 0.25 | 0 | 196.4 |
| CAM.21 | 0.16 (C.1) | 0.17 | 0 | 0 | 0.17 | 126.3 |
| CAM.22 | 0.16 (C.1) | 0 | 0.17 | 0 | 0.17 | 127.2 |
| CAM.23 | 0.16 (C.1) | 0 | 0 | 0.17 | 0.17 | 133.9 |
| CAM.24 | 0.16 (C.1) | 0.17 | 0 | 0.17 | 0 | 143.7 |
| CAM.25 | 0.17 (C.1) | 0 | 0.17 | 0 | 0.17 | 122.2 |
| CAM.26 | 0.17 (C.1) | 0.17 | 0.16 | 0 | 0 | 140.1 |
| CAM.27 | 0.25 (C.1) | 0 | 0 | 0 | 0 | 129.3 |
| CAM.28 | 0.25 (C.1) | 0.25 | 0 | 0 | 0 | 130.0 |
| CAM.29 | 0.25 (C.1) | 0 | 0 | 0.25 | 0 | 135.9 |

Table 1 (continued): Composition of comparative and inventive cathode active materials

| Number | mole-% (C) | mole-% (D.1) | mole-% (D.2) | mole-% (D.3) | mole-% (D.4) | R growth [%] |
|---|---|---|---|---|---|---|
| CAM.30 | 0.26 (C.1) | 0 | 0 | 0 | 0 | 141.2 |
| CAM.31 | 0.5 (C.1) | 0 | 0 | 0 | 0 | 127.9 |
| CAM.32 | 0.5 (C.2) | 0 | 0 | 0 | 0 | 137.4 |
| CAM.33 | 0.5 (C.3) | 0 | 0 | 0 | 0 | 131.6 |
| CAM.34 | 0.5 (C.4) | 0 | 0 | 0 | 0 | 127.7 |
| C-CAM.35 | 0.5 C-(C.5) | 0 | 0 | 0 | 0 | 191.2 |

(continued)

| Number | mole-% (C) | mole-% (D.1) | mole-% (D.2) | mole-% (D.3) | mole-% (D.4) | R growth [%] |
|---|---|---|---|---|---|---|
| C-CAM.36 | 0.5 C-(C.6) | 0 | 0 | 0 | 0 | 220.4 |
| C-CAM.37 | 0.5 C-(C.7) | 0 | 0 | 0 | 0 | 240.1 |

Testing, general method

The electrochemical testing was carried out accordingly in coin half cells to obtain resistance growth after 100 cycles as shown in Table.1

Electrode manufacture: Electrodes contained 93% CAM, 1.5% carbon black (Super C65), 2.5% graphite (SFG6L) and 3% binder (polyvinylidene fluoride, Solef 5130). Slurries were mixed in N-methyl-2-pyrrolidone and cast onto aluminum foil by doctor blade. After drying of the electrodes 6 h at 105 °C in vacuo, circular electrodes were punched, weighed and dried at 120 °C under vacuum overnight before entering in an Ar filled glove box.

Half-Cell Electrochemical Measurements: Coin-type electrochemical cells, were assembled in an argon-filled glovebox. The positive 14 mm diameter (loading 11.0·0.4 mg cm-2) electrode was separated from the 0.58 thick Li foil by a glass fiber separator (Whatman GF/D). An amount of 100 µl of 1 M $LiPF_6$ in ethylene carbonate (EC): dimethyl carbonate (DMC), 1:1 by weight, was used as the electrolyte. Cells were galvanostatically cycled between 3.0 and 4.3 V at the 0.1C rate and 25 °C to obtain a 1st discharge capacity, using a Maccor 4000 battery cycler.

Full-Cell Electrochemical Measurements: Coin-type electrochemical cells were assembled in an argon-filled glovebox. The positive 17.5 mm diameter (loading: 11.3·1.1 mg $cm^{-2}$) electrode was separated from the 18.5 mm graphite anode by a glass fiber separator (Whatman GF/D). An amount of 300 µl of 1 M $LiPF_6$ in EC: ethyl methyl carbonate (EMC), 1:1 by weight, containing 2 wt-% vinylene carbonate, was used as the electrolyte. Cells were galvanostatically cycled between 2.7 and 4.20 V at a the 1C rate and 45 °C with a potentiostatic charge step at 4.2 V for 1 h or until the current drops below 0.02C using a Maccor 4000 battery cycler.

During the resistance measurement (conducted every 25 cycles at 25 °C), the cell was charged in the same manner as for cycling. Then, the cell was discharged for 30 min at 1 C to reach 50% state of charge. To equilibrate the cell, a 30 s open circuit step followed. Finally, a 2.5 C discharge current was applied for 30 s to measure the resistance. At the end of the current pulse, the cell was again equilibrated for 30 s in open circuit and further discharged at 1 C to 2.7 V vs. graphite.

To calculate the resistance, the voltage before applying the 2.5 C pulse current, V0s, and after 10 s of 2.5 C pulse current, V10 s, as well as the 2.5 C current value, (I in A), were taken. The resistance was calculated according to Equation 1 (S: electrode area, V: voltage, I: 2.5C pulse current).

$$R = (V0s-V10s)/I \cdot S \qquad \text{(Equation 1)}$$

Anode: graphite, separated from the cathode by a glass-fiber separator.

## Claims

1. Process for making an electrode active material according to general formula $Li_{1+x}TM_{1-x}O_2$, wherein TM is a combination of Ni and Co and Zr and at least one metal selected from Mn and Al, and, optionally, at least one of Mg, Ti, and W, wherein at least 60 mole-% is Ni, referring to the sum of Ni, Co and, if applicable, Mn and Al, and x is in the range of from zero to 0.2, said process comprising the following steps:

    (a) mixing

        (A) a mixed oxide or mixed oxyhydroxide of Ni, Co, and at least one of Mn and Al, and
        (B) at least one lithium compound selected from lithium hydroxide, lithium oxide and lithium carbonate, and
        (C) at least one oxide or hydroxide or oxyhydroxide of Zr with an average diameter D50 in the range of from 1 to 7 µm,

    and in compounds (C) that are selected from oxides of Zr, their crystallite size is in the range of from 5 to 20 nm,
    (b) subjecting said mixture to heat treatment at a temperature in the range of from 650 to 1000°C.

2. Process according to claim 1 wherein TM in the electrode active material is a combination of metals according to general formula (I) €

$$(Ni_aCO_bMn_c)_{1-d-e}M_dZr_e \qquad (I)$$

with

a being in the range of from 0.6 to 0.95,
b being in the range of from 0.03 to 0.2,
c being in the range of from zero to 0.2,
d being in the range of from zero to 0.05,
e being in the range of from 0.0001 to 0.01,

M is selected from Al, Mg, Ti, W and combinations of at least two of the foregoing, and

$$a + b + c = 1,$$

wherein, when c is zero, d is greater than zero and M includes Al, or, when M does not include Al or d is zero, c is greater than zero.

3. Process according to claim 1 or 2 wherein said mixing in step (a) is performed in the dry state.

4. Process according to any of the preceding claims wherein step (b) is performed in a rotary kiln or roller hearth kiln.

5. Process according to any of the preceding claims wherein compound (C) is selected from $ZrO(OH)_2$, $ZrO_2{\cdot}aq$, and $Zr(OH)_4$.

6. Process according to any of the preceding claims wherein compound (C) has a specific surface (BET) in the range of from 200 to 400 $m^2/g$.

7. Process according to any of the preceding claims wherein precursor (A) is an oxide of Mn, Co and Ni.

8. Process according to any of the preceding claims wherein precursor (A) is obtained by co-precipitation of a mixed hydroxide of nickel, cobalt and, if applicable, manganese, followed by drying under air and dehydration.

9. Process according to any of the preceding claims, wherein the electrode active material has a surface (BET) in the range of from 0.1 to 0.8 $m^2/g$, determined according to DIN-ISO 9277:2003-05.

10. Process according to at least one of the preceding claims wherein in the mixing step (a), (D) at least one oxide or hydroxide or oxyhydroxide of Mg, Al, Ti or W is included.

**Patentansprüche**

1. Verfahren zur Herstellung eines Elektrodenaktivmaterials gemäß der allgemeinen Formel $Li_{1+x}TM_{1-x}O_2$, wobei TM für eine Kombination von Ni und Co und Zr und mindestens einem Metall, das aus Mn und Al ausgewählt ist, und gegebenenfalls mindestens einem von Mg, Ti und W steht, wobei es sich bei mindestens 60 Mol-%, bezogen auf die Summe von Ni, Co und, falls zutreffend, Mn und Al, um Ni handelt und x im Bereich von null bis 0,2 liegt, wobei das Verfahren die folgenden Schritte umfasst:

(a) Mischen von

(A) mindestens einem Mischoxid oder Mischoxyhydroxid von Ni, Co und mindestens einem von Mn und A1 und
(B) mindestens einer Lithiumverbindung, die aus Lithiumhydroxid, Lithiumoxid und Lithiumcarbonat ausgewählt ist, und
(C) mindestens einem Oxid, Hydroxid oder Oxyhydroxid von Zr mit einem mittleren Durchmesser D50 im

Bereich von 1 bis 7 µm,

und in Verbindungen (C), die aus Oxiden von Zr ausgewählt sind, deren Kristallitgröße im Bereich von 5 bis 20 nm liegt,
(b) Wärmebehandeln der Mischung bei einer Temperatur im Bereich von 650 bis 1000 °C.

**2.** Verfahren nach Anspruch 1, wobei es sich bei TM in dem Elektrodenaktivmaterial um eine Kombination von Metallen gemäß der allgemeinen Formel (I)

$$(Ni_aCo_bMn_c)_{1-d-e}M_dZr_e \qquad (I)$$

handelt, wobei

a im Bereich von 0,6 bis 0,95 liegt,
b im Bereich von 0,03 bis 0,2 liegt,
c im Bereich von null bis 0,2 liegt,
d im Bereich von null bis 0,05 liegt,
e im Bereich von 0,0001 bis 0,01 liegt,
M aus Al, Mg, Ti, W und Kombinationen von mindestens zwei davon ausgewählt ist und

$$a + b + c = 1,$$

wobei dann, wenn c null ist, d größer als null ist und M Al enthält, oder dann, wenn M kein Al enthält oder d null ist, c größer als null ist.

**3.** Verfahren nach Anspruch 1 oder 2, wobei man das Mischen in Schritt (a) im trockenen Zustand durchführt.

**4.** Verfahren nach einem der vorhergehenden Ansprüche, wobei man Schritt (b) in einem Drehofen oder einem Rollenherdofen durchführt.

**5.** Verfahren nach einem der vorhergehenden Ansprüche, wobei man Verbindung (C) aus $ZrO(OH)_2$, $ZrO_2 \cdot aq$ und $Zr(OH)_4$ auswählt.

**6.** Verfahren nach einem der vorhergehenden Ansprüche, wobei Verbindung (C) eine spezifische Oberfläche (BET) im Bereich von 200 bis 400 $m^2/g$ aufweist.

**7.** Verfahren nach einem der vorhergehenden Ansprüche, wobei es sich bei Vorstufe (A) um ein Oxid von Mn, Co und Ni handelt.

**8.** Verfahren nach einem der vorhergehenden Ansprüche, wobei man Vorstufe (A) durch Copräzipitation eines Mischhydroxids von Nickel, Cobalt und, falls zutreffend, Mangan und anschließendes Trocknen an der Luft und Dehydratisierung erhält.

**9.** Verfahren nach einem der vorhergehenden Ansprüche, wobei das Elektrodenaktivmaterial eine gemäß DIN-ISO 9277:2003-05 bestimmte Oberfläche (BET) im Bereich von 0,1 bis 0,8 $m^2/g$ aufweist.

**10.** Verfahren nach mindestens einem der vorhergehenden Ansprüche, wobei man im Mischschritt (a) (D) mindestens ein Oxid oder Hydroxid oder Oxyhydroxid von Mg, Al, Ti oder W mitverwendet.

## Revendications

**1.** Procédé pour la préparation d'un matériau actif d'électrode selon la formule générale $Li_{1+x}TM_{1-x}O_2$, TM étant une combinaison de Ni et Co et Zr et d'au moins un métal choisi parmi Mn et Al, et, éventuellement, d'au moins un parmi Mg, Ti et W, au moins 60 % en moles étant Ni, faisant référence à la somme de Ni, Co et, si cela est applicable, Mn et Al, et x étant dans la plage allant de zéro à 0,2, ledit procédé comprenant les étapes suivantes :

(a) mélange

(A) d'un oxyde mixte ou d'un oxyhydroxyde de Ni, Co, et d'au moins un parmi Mn et Al, et
(B) d'au moins un composé du lithium choisi parmi l'hydroxyde de lithium, l'oxyde de lithium et le carbonate de lithium, et
(C) d'au moins un oxyde ou hydroxyde ou oxyhydroxyde de Zr doté d'un diamètre moyen D50 dans la plage allant de 1 à 7 μm,

et dans les composés (C) qui sont choisis parmi des oxydes de Zr, leur taille de cristallite est dans la plage allant de 5 à 20 nm,
(b) soumission dudit mélange à un traitement thermique à une température dans la plage allant de 650 à 1 000 °C.

2. Procédé selon la revendication 1, TM dans le matériau actif d'électrode étant une combinaison de métaux selon la formule générale (I)

$$(Ni_aCo_bMn_c)_{1-d-e}M_dZr_e \qquad (I)$$

a étant dans la plage allant de 0,6 à 0,95,
b étant dans la plage allant de 0,03 à 0,2,
c étant dans la plage allant de zéro à 0,2,
d étant dans la plage allant de zéro à 0,05,
e étant dans la plage allant de 0,0001 à 0,01,
M étant choisi parmi Al, Mg, Ti, W et des combinaisons d'au moins deux des précédents, et

$$a + b + c = 1,$$

où, lorsque c est égal à zéro, d est supérieur à zéro et M comprend Al, ou, lorsque M ne comprend pas Al ou que d est égal à zéro, c est supérieur à zéro.

3. Procédé selon la revendication 1 ou 2, ledit mélange dans l'étape (a) étant réalisé à l'état sec.

4. Procédé selon l'une quelconque des revendications précédentes, l'étape (b) étant réalisée dans un four rotatif ou dans un four à soles à rouleau.

5. Procédé selon l'une quelconque des revendications précédentes, le composé (C) étant choisi parmi $ZrO(OH)_2$, $ZrO_2 \cdot aq$, et $Zr(OH)_4$.

6. Procédé selon l'une quelconque des revendications précédentes, le composé (C) possédant une surface spécifique (BET) dans la plage allant de 200 à 400 $m^2/g$.

7. Procédé selon l'une quelconque des revendications précédentes, le précurseur (A) étant un oxyde de Mn, Co et Ni.

8. Procédé selon l'une quelconque des revendications précédentes, le précurseur (A) étant obtenu par coprécipitation d'un hydroxyde mixte de nickel, de cobalt et, si cela est applicable, de manganèse, suivie par un séchage sous air et une déshydratation.

9. Procédé selon l'une quelconque des revendications précédentes, le matériau actif d'électrode possédant une surface (BET) dans la plage allant de 0,1 à 0,8 $m^2/g$, déterminée selon la norme DIN-ISO 9277:2003-05.

10. Procédé selon l'une quelconque des revendications précédentes, dans lequel dans l'étape de mélange (a) , (D) au moins un oxyde ou hydroxyde ou oxyhydroxyde de Mg, Al, Ti ou W est inclus.

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

### Patent documents cited in the description


- US 2015249248 A1